# EUROPEAN PATENT SPECIFICATION

(11) **EP 2 463 787 B1**
(45) Date of publication and mention of the grant of the patent: **04.05.2016**
(21) Application number: 11188614.9
(22) Date of filing: 10.11.2011
(51) Int. Cl.: G06F 17/30, H04N 5/445, H04N 21/466

(54) **Method for displaying graphical signatures of users in a menu, and related terminals**
Verfahren zur Anzeige in einem Menu von graphischer Benutzersignature, und entsprechende Endgeräte
Méthode d'affichage dans un menu de signatures graphiques d'utilisateurs, et terminaux correspondants

(30) Priority: 13.12.2010 EP 10306401
(43) Date of publication of application: 13.06.2012
(73) Proprietor: Thomson Licensing, 92130 Issy-les-Moulineaux (FR)
(72) Inventor: Langlois, Tristan, 35410 Chateaugiron (FR); Esselimani, Amina, 85300 Challans (FR); Gallardo, Patrick, 35140 Vendel (FR); Babon, Frederic, 35220 Saint Jean sur Vilaine (FR)
(74) Representative: Thies, Stephan

(56) References cited:
- EP-A1- 1 973 343
- US-A1- 2008 082 908
- US-A1- 2010 199 205
- MING C HAO ET AL: "Importance-Driven Visualization Layouts for Large Time Series Data", INFORMATION VISUALIZATION, 2005. INFOVIS 2005. IEEE SYMPOSIUM ON MINNEAPOLIS, MN, USA OCT. 23-25, 2005, PISCATAWAY, NJ, USA,IEEE, PISCATAWAY, NJ, USA, 23 October 2005 (2005-10-23), pages 27-27, XP010880915, DOI: DOI:10.1109/INFOVIS.2005.20 ISBN: 978-0-7803-9464-3
- MACKINLAY J D ET AL: "Show Me: Automatic Presentation for Visual Analysis", IEEE TRANSACTIONS ON VISUALIZATION AND COMPUTER GRAPHICS, IEEE SERVICE CENTER, LOS ALAMITOS, CA, US, vol. 13, no. 6, 1 November 2007 (2007-11-01), pages 1137-1144, XP011196390, ISSN: 1077-2626, DOI: DOI:10.1109/TVCG.2007.70594

## Description

### FIELD OF THE INVENTION

The present invention relates to method for comparing graphical signature corresponding to several user profiles and a device implementing the method.

### BACKGROUND

As the number of information and content available to users has increased, along with the diversity of the content available such as text, music, video programming, and other multimedia rich content, it has become increasingly challenging for users to identify, order and sort contents of interest. The preferences of a user may be defined by a user profile that may be created with several manners. According to a very simple manner, the user manually introduces his profiles by selecting items in a list of items such as : themes, topics, age, etc.

More recently, such content lists or guides have become available in a numeric format, for example, electronic program guides (EPGs) for television. Like printed television program guides, EPGs may be like a digital cable program guide containing grids listing the available television programs by attributes such as time and date, channel, topic and title. The attributes associated to channels or programs are extracted by the television receiver in service information tables transmitted in the broadcast channels. The user sees the proposed programs and selects one corresponding to his preference. As selections proceed, the EPG may analyze the different selected programs, extract their attributes and store them. After a number of selections, the EPG may recognize the kind of programs usually selected by the user and propose, among the current available channels, programs which have the same
attributes as the usually selected programs. With this manner, the television receiver matches the recorded user preferences with received program data, such as an EPG, to make recommendations custom made for each particular user.

At the present time, the television receivers are also connected to a network, such as Internet, allowing communication with other users. Numerous forums exist so the different users chat and exchange their comments about any subject or topic. The television receivers send the identity of the current viewed program to a server and, at the request of the user, the server connects users that; are viewing the same program and propose them a discussion.

EP 1 973 343 A1 discloses a method for depicting an ongoing relationship between a user and media content using a spacial model. The preference levels of the user with regard to the content are included in the spacial model.

MING C. HAO, "Importance-Driven Visualization Layouts for Large Time Series Data", IEEE Symposium on Information Visualization 2005 (INFOVIS'05), October 23-25, Minneapolis, MN, USA discloses a method for monitoring and analyzing large time series. The visualization of such large time series Is disclosed.

But, the fact that two users are viewing the same program, does not imply that they have the same preference. A need therefore exists for a method and system for displaying user preferences and user profile in a more efficient manner. A further need exists for a method and system for comparing the user preferences and user profile in a manner that permits a user to efficiently choice another user for a call or a discussion.

### SUMMARY

Accordingly, it is an object of the invention to provide a more reliable and efficient method for establishing a user profile and preference, and to present the different user profile and preferences in order to choice other users according to their preference

The subject of the invention is a method of displaying of graphical signature representative of the preferences of a plurality of users ; characterized in that it comprises the steps of:
- on the display screen of a terminal, preliminary displaying of a first menu representing a plurality of documents by corresponding graphical identifiers, the first menu being split ir a plurality of areas, each document of said plurality being identified by a graphical identifier which is displayed in an area of the first menu which depends on attribute values associated with this document,
- by each user of said plurality of users, inputting of commands of selection of at least one document at the level of the terminal, the selected document(s) being reputed to be representative of the user's preference,
- said inputting commands of selection of a document is performed by graphically highlighting the graphical identifier identifying said selected document, and
- on the display screen, subsequent displaying in a second menu of a plurality of graphical signatures each one being associated with an user, where each displayed signature is determined from the selection of documents selected by its associated user, where each graphical signature of a user is formed by a bar of zones, where each zone of a bar has a specific graphical distinction, where the size of each zone of a bar depends on the number of documents selected by said user into a determined area of the first menu, and where the appearing order of each zones in the bars is the same for all the displayed graphical signatures.

In this way, the single manner of determining and displaying of each graphical signature in the same menu allows an easy comparison between the different displayed signatures. At a glance, a user may see the similarities and the differences of the user profiles associated with each signature, thus optimizing the search of user interested by the same things.

According to a first improvement, one displayed graphical signature is determined from the selection of documents selected by the terminal's user, this signature being graphically highlighted. Further to this aspect, the user can compare his own signature with signatures of other people. According to another improvement, the appearing order of the zones in the graphical signature depends on the numbers of documents selected by the terminal's user in each area, the zones representing the most numerous selected document being at the first place.

According to one aspect, the method comprises a step of displaying a similarity value between the graphical signature of the terminal's user and the graphical signature of the other users With this manner, the user may easily know the users having the same preference.

According to another aspect, the identifiers in each areas of the first menu appear with the same graphical distinction as the corresponding zone in the bar. According to another aspect, the method comprises a step of inputting of commands for moving the graphic signatures displayed in the second menu.

According to another aspect, the displayed bars are formed with tridimensional zones, the depth of each zone depending on the number of documents selected into the corresponding area of the first menu. According to another aspect, the displayed graphical signatures are determined from several pluralities of documents selected by the same user at different times.

Another subject of the invention is an electronic device comprising a means of generating of a display signal of a first menu representing a plurality of documents by corresponding graphical identifiers, the first menu being split in a plurality of areas, each document of said plurality being identified by a graphical identifier which is displayed in an area of the first menu which depends on attribute values associated with this document,
and a means of inputting of commands enabling the selection by a user of at least one document, the selected document(s) being reputed to be representative of the user's preference,
the means of generating of a display signal displaying in a second menu of a plurality of graphical signatures each one being associated with an user, where each displayed signature is determined from the selection of documents selected by its associated user, where each graphical signature of a user is formed by a bar of zones, where each zone of a bar has a specific graphical distinction, where the size of each zone of a bar depends on the number of documents selected by said user into a determined area of the first menu, and where the appearing order of each zones in the bars is the same for all the displayed graphical signatures.

### BRIEF DESCRIPTION OF THE DRAWINGS

Other characteristics and advantages of the invention will now become apparent with more details in the context of the description which follows of exemplary embodiments given by way of illustration by referring to the appended figures as listed below, where:
- figure 1 shows a block diagram of an audiovisual terminal for implementing an exemplary embodiment of the invention,
- figure 2 shows a flow chart showing a process for selecting users and displaying their graphical signatures according to one exemplary embodiment of the invention,
- figure 3 shows a first example of menu for the selection of a plurality of documents,
- figure 4 shows a second example of menu for the selection of a plurality of documents,
- figure 5 shows an example of menu displaying a determined number of selected documents,
- figure 6 shows an example of a graphical signature of a user,
- figure 7 shows a menu allowing the comparison of several graphical signatures, according to one exemplary embodiment of the invention.

### DESCRIPTION

The present invention will be illustrated below in conjunction with exemplary displayed menus and displaying devices. The present invention provides, among other features, a terminal equipped with a browsing application and means for selecting at least one other user according to theirs preferences.

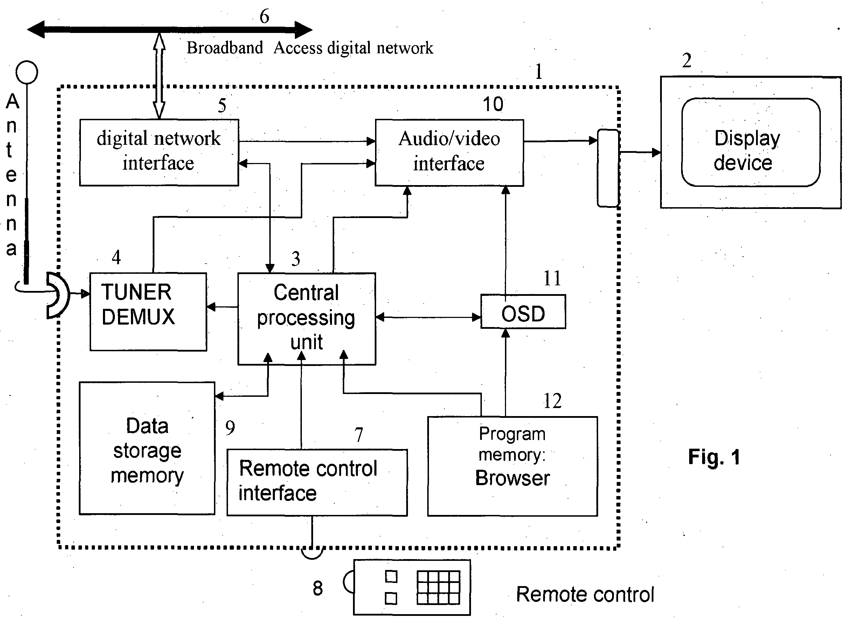

In reference to figure 1, the operation of an audiovisual terminal 1 connected to a television display device 2 having a display screen will first of all be described. The audiovisual terminal 1, for example a decoder, comprises a central processing unit 3 linked to a program memory 12, reception means such as a demodulator 4 and a demultiplexer for receiving audio/video data from a transmission network via a receiving antenna. The terminal 1 is preferably of digital type and receives digital audiovisual services, but the invention may also be used in an analogue-type terminal receiving channels transmitted by microwave channels. As a variant, the terminal 1 may be provided with an interface 5 for communication with a broadband access digital network 6 making it possible to transmit audio/video documents in real time and attributes values characterizing the audio/video documents. This network is, for example, the Internet. The terminal 1 also comprises an infrared signal remote control interface 7 for receiving signals from a remote control 8, a data storage memory 9 for storing received document and service data, and an audio/video decoding logic 10 for generating audiovisual signals sent to the television display device 2. The remote control 8 is provided with direction keys: ↑, ↓, →, ← and with the key: "OK" whose roles will be explained later.

The audiovisual terminal 1 also comprises an audio/video interface circuit 10 for directly displaying onto the display screen the audiovisual transmissions received from the transmission network via the receiving antenna or from the broadband access digital network 6, and a data embedding circuit 11, often called OSD circuit, standing for "On-Screen Display". The OSD circuit 11 is a text and graphics generator which makes it possible to display on the display screen menus, pictograms (for example, a number corresponding to the channel being viewed) and images, and which makes it possible to display the different display screens according to the present invention. The OSD circuit is controlled by the central processing unit 3 and a browser application contained in the memory 12. This application is either resident in a ROM memory, or downloaded and saved in a writable memory. A variant involves having a mosaic application produced in the form of an ASIC-type custom circuit for example.

The multimedia documents that the terminal 1 may receive and send to the display device for reproduction are audiovisual documents, audio documents, or photos. The broadband access digital network 6 transmits to terminal 1 data comprising multimedia documents and descriptive documents of these documents. The descriptive data, also called "metadata" comprise the attributes of multimedia documents accessible via this broadband access digital network 6. They are stored in the database of the memory 9 of the terminal 1 and are continually updated when there are new receptions.

In the example that follows, the multimedia documents are classed according to different criteria, hereafter are examples of classification criteria and their associated attribute values enabling classification of the documents in the lists:
- Language: English, French, German, Italian, Arab, other
- Theme : film, news, documentary, sport, game/show.

Second level of theme (associated sub-attribute) : sub-theme:
- film: {adventure, drama, erotic, crime, fiction, other}
- news: {TV news, radio, weather, markets, sport, other}
- documentary: {general, nature, culture, social, history}
- game/show : {general, variety, circus, Talk Show, theatre}
- sport: {General, football, tennis, basketball, athletics, nautical}
- ...
   - Source: TPS, Canal Satellite, DVD, video, Web.
   - Morality: 0 (general public),1,....,3 (pornographic).
   - Media: audio, video, image, text,
   - Age of the document, measured for example by its creation date.

These criteria enable the classification of multimedia documents available from terminal 1 and the creation of lists by selecting one or more criteria, these lists may be ordered.

The classification of each multimedia document is made according to the attributes associated with each classification criterion. Some attributes are digital in nature (the criterion of morality, document seniority, etc.). Being rigorous, it is possible to assign a digital value to each attribute by a convention. For example, each theme attribute of a film is associated with the following values: "adventure" is assigned the value 1, "drama" is assigned the value 2, "erotic" is assigned the value 3, "crime" is assigned the value 4, etc. Advantageously, the assignment of a value is carried out by the broadcaster. The attribute values (digital values or not) that are assigned to them, are used for defining the location of the identifiers associated to each document displayed in a menu. Audiovisual documents are examples of elements used for navigation, but any other element (audio document, picture, book, ..) that may be represented by an identifier on a screen and be associated with a classification criterion may be used by the present invention.

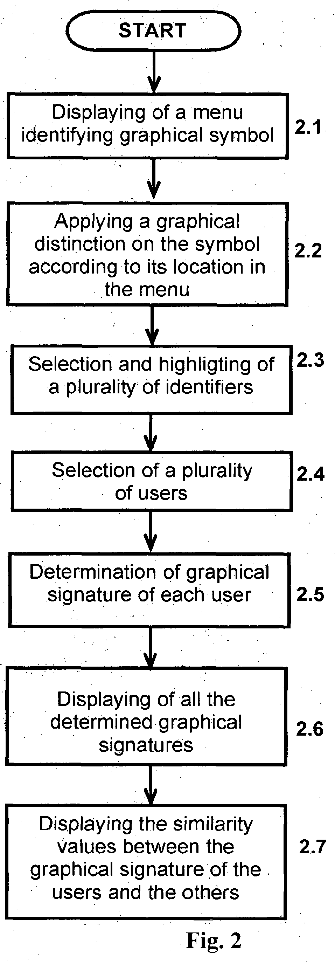

The steps of a preferred embodiment of the invention will now be described with the help of figure 2. According to a preferred embodiment, a menu showing the identifier of selectable documents is displayed (step 2.1). The browser then extracts the values of the attributes stored in the database and processes it to produce the navigation menus displayed on the display device 2 and proposed to the user. The coordinates of each identifier points identifying each document in a multidimensional space are obtained on the basis of the attributes values. The space containing these points possesses two dimensions if the menu is displayed on a standard two-dimensional display screen or possesses three dimensions if the menu is displayed on a three-dimensional display screen.

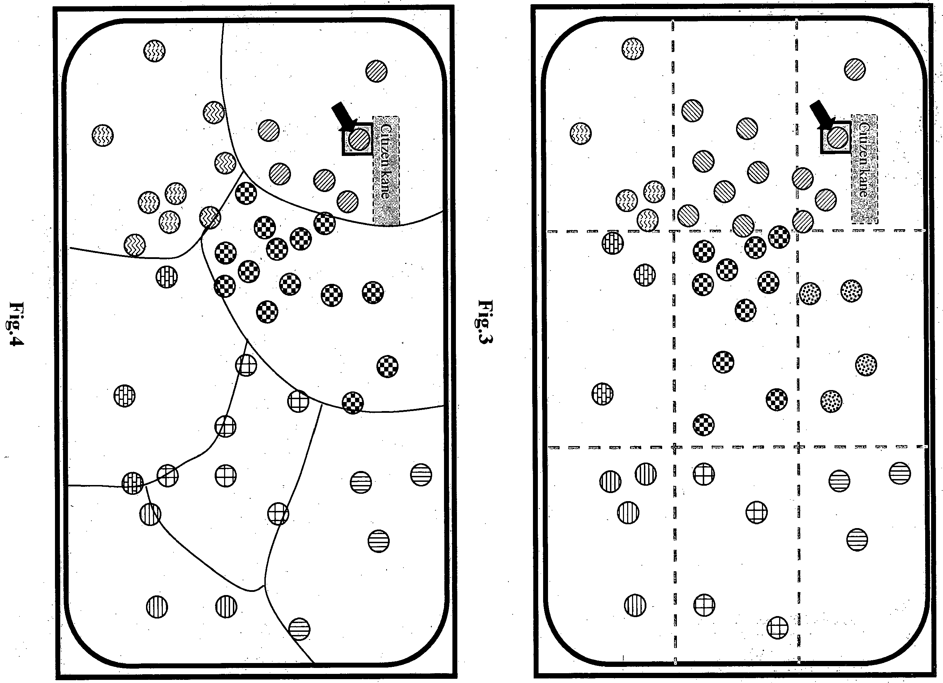

According to the present exemplary embodiment, Figure 3 represents a two-dimensional browsing menu. The coordinates (xi, yi) of each point are obtained by projecting the point Pi onto a space of dimension 2. The projection is determined by principal component analysis or PCA. PCA is described in particular in the Saporta document 1990, entitled "Probabilités Analyse de données et statistiques, Edition Technip." [in English : "probabilities data analysis and statistics, published by Technip"]. This well-known data analysis algorithm seeks to discover a subsystem of axes that is linearly tied to the original which best "spreads" the samples, these axes tend to merge the correlated original axes. The same example may be applied to a space of dimension 3, using a projection in such a space.

The present invention also provides an application for browsing among graphical user signatures and for selecting a user with comparing the user signatures. The figure 2 shows a flow chart showing a process for selecting users and displaying their graphical signatures according to one exemplary embodiment of the invention.

The step of displaying 2.1 the menu of browsing consisting in projecting the points onto a one-, two- or three-dimensional space makes it possible to create a graphical representation of the collection of documents accessible from the device 1. A graphical representation such as this constitutes together with a keypad a user interface making it possible to select any point whatsoever within a group. To do this, the user may jump from one point to another by indicating a direction of navigation with the aid of the direction keys. Another manner for selecting an identifier consists in moving a cursor to put it on the selected identifier, a mouse controlling the moving of the cursor. An example of a cursor is displayed by an arrow in the menu of the figure 3. When the cursor is located on an identifier, a window appears to show the title of the document, or other information relative to this document, such as : the date of creation, the type, the name of the producer.

In step 2.2, the browser splits the displayed menu into several areas defining several groups of documents. Depending on whether a document is a member of one or another group, the identifier associated with this document has a graphical distinction such as certain shape (as shown in Figure 3), or of a certain colour, or of a particular underlining, or of a frequency of flashing or any other distinctive graphical characteristic. According to the exemplary embodiment shown by the Figure 3, the browsing menu is split into determined areas, the belonging of a group depends on the location of the identifier in a determined area. According to the example of the figure 3, the browsing menu is divided in nine areas with regular geometric shape. Each area has the same surface area. The identifiers in a determined area appear with the same specific graphical distinction. Many regular geometric shapes for splitting are possible, such as rectangular, triangular, trapezoidal, etc . According to an improvement, the number of the identifiers in each area is the same, at one unit plus or minus.

Another way to split the browsing menu consists in taking the values of a determined classification criterion which is shared by all the documents. The figure 4 shows a new manner of splitting. The locations of each identifier are identical as those of the figure 3 but the determined areas have not a geometry splitting. According to the example of the figure 4, six theme values are selected by the browser. The shapes of each identifier depend on the theme value of the document associated with this identifier. According to an improvement, in a configuration step, the browser proposes several input commands, so that the user may select the manner of splitting that he wishes.

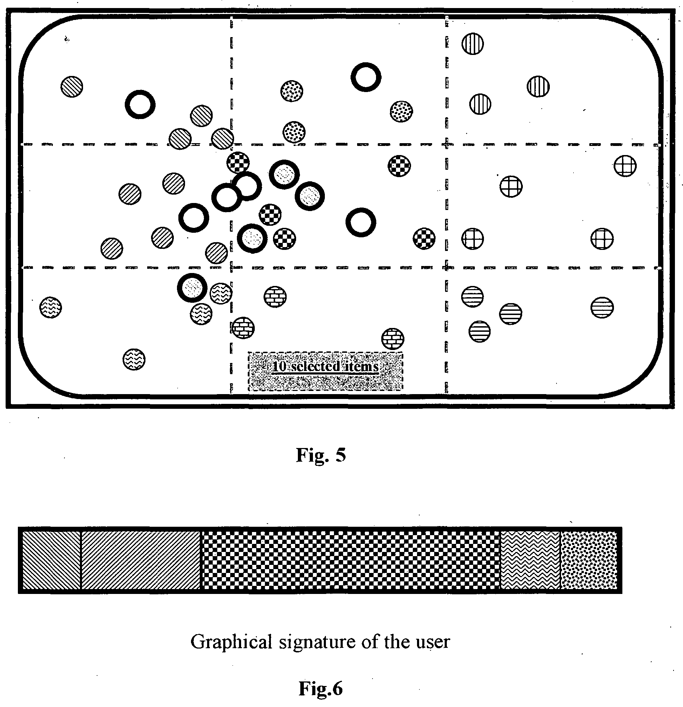

In step 2.3, the user successively selects a plurality of documents according to his preference. When the cursor is placed on an identifier, the name of the associated document is displayed. The figure 3 shows that the user selects the document "citizen Kane". When the user inputs on the key "OK" of the remote control or the keyboard, this document is selected and the corresponding identifier is highlighted. The figure 5 shows a browsing menu with ten highlighted identifiers corresponding to the previously selected documents. According to a preferred embodiment, the highlight consists in a thick surround. A textual window in the menu presents the number of the current selected identifiers. The user may deselect a document by selecting again the identifier and input on a specific key.

At a certain time, the user wishes to compare his preferences with others profiles of other users. With this manner, the user may find one or several users having similar profiles, or at the opposite, other users having completely different profiles. To do that, the browser displays different graphical signatures associated with other users. In step 2.4, the browser allows selection of a plurality of users. With this manner, the user may make a first selection among a great number of users. For example, the user may select the people of a determined region or city, or the people connected since the last ten days.

In step 2.5, the browser determines the graphical signatures of the users according to the set of selected documents selected by each user. We may consider that the selected documents represent the preferred document and the attributes of these documents correspond to the user profile. Since the locations of the identifier of the selected documents depend on a determined number of attribute values, the number of documents selected in each area is representative of the preferences of the user. The graphical signature is reached with the sum of numbers of selected document in each area.

In step 2.6, according to a preferred embodiment, the browser displays a menu for comparing a plurality of graphical signatures. Each displayed signature is determined from the selection of documents selected by its associated user during the step 2.3. Each graphical signature of a user is displayed as a graphic bar which is split as many zones as there are areas of the first menu having selected documents. The order of the appearance of graphical distinctions in each bar is the same for all the displayed graphical signatures so that the user may easily compare the different displayed bar and determine the similarities between the graphical signatures. Advantageously, the appearing order of the zones in the graphical signature depends on the numbers of documents selected by the terminal's user in each area. For example, the zones representing the most numerous selected document are at the first place, in the left side of the bar. With this manner, the most often used preference is placed in first so that the comparison makes easier.

Advantageously, the graphical distinction for a zone of the bar and the graphical distinction applied on the identifiers associated with the corresponding selected documents are the same. The size of the zone depends on the number of selected identifiers that have this graphical distinction. For example, if a user selects ten documents and three in the same area, a zone corresponding to 30% of the graphic bar is displayed with this graphical distinction. The figure 6 shows an example of displayed graphical signature, corresponding to the selection of documents presented in the figure 5. The graphical signature contains 5 zones, the first corresponding to one selected document in an area, the second: two documents, the third: five documents, the fourth and the fifth: one document.

Advantageously, the menu of displaying the graphical signature is represented in a three-dimensional space. The different zones of the bars present a third dimension : the depth which may be used to indicate a parameter. For example, the depth value of each zone of the bar depends on the number of documents selected into the corresponding area of the first menu.

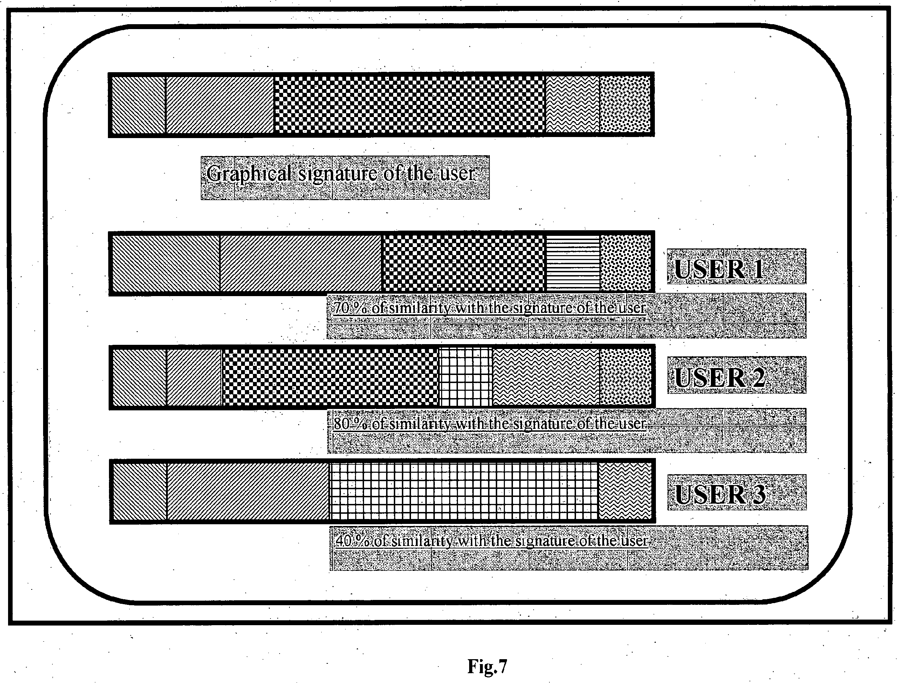

The figure 7 shows a menu allowing an easy comparison of several displayed graphical signatures. The user may in a glance make the visual comparison between the signature and determine the similar signatures. Advantageously, the signatures are located the ones underneath the others for a better comparison. The order of zones is the same for each displayed signatures. The figure 7 shows a menu allowing an easy comparison of several displayed graphical signatures. The user may in a glance makes the visual comparison between the signatures and determine the similar signatures.

According to an improvement, in step 2.7, the browser displays a similarity value between the graphical signatures of the user's terminal and the other users. This improvement may help the user to compare the different graphical signatures and to select one. According to an example of embodiment of this improvement, the browser displays the percentage of the surface area of the graphical signatures of the user's terminal and each other users that have the same graphical distinction. By seeing the figure 7, the user may see that the 70 % of the whole surface graphic bar has the same graphical distinctions between the user of the terminal 1 and the user 1, 80 % between the user of the terminal 1 and the user 2, and 40 % between the user of the terminal 1 and the user 3. It is important to note that the percentage is calculated according to surface of the bars, and not according to the number of documents selected by each user.

According to an improvement, the signature of the user of the terminal 1 is always displayed, preferably at the top of the menu. Commands for moving the location of the displayed signatures are available for a best comparison between the signature of the user and the others displayed signatures. When the user finds an interesting signature, he may select it and calls the corresponding user with its address transmitted by the network. According to improvement, the name of the others users are never displayed in the menu. With this manner, the call and the subsequent discussions with a selected user are anonymous.

According to an improvement, during a long period, the user's terminal may select several time a plurality of documents. According to the time, the user's preference may move and change to other kind of films, music, book, etc. It could be interesting that the user can see the moving of his preference according to the time. To do that, the terminal stores the different selection and indexes them by time. The menu of the figure 7 can be adapted to display all or part of the user's signatures stored in the terminal. The menu displays the same name of user with specifying the date of the creation of the signature.

It is important to note that the user interface that has been described may be used in any multimedia terminal given that the terminal has sufficiently powerful video capacity to enable a user to view on screen menus.

## Claims

1. Method of displaying of graphical signature representative of the preferences of a plurality of users, comprising the steps of:
- on the display screen (2) of a terminal (1), preliminary displaying (2.1) of a first menu representing a plurality of documents by corresponding graphical identifiers, the first menu being split in a plurality of areas, each document of said plurality being identified by a graphical identifier which is displayed in an area of the first menu which depends on attribute values associated with this document,
- by each user of said plurality of users, inputting of commands of selection (2.3) of at least one document at the level of the terminal (1), the selected document(s) being reputed to be representative of the user's preference,
**characterized in that** the method further comprises the following step:
- on the display screen (2), subsequent displaying (2.6) in a second menu of a plurality of graphical signatures each one being associated with an user, where each displayed signature is determined from the selection of documents selected by its associated user, where each graphical signature of a user is formed by a bar of zones, where each zone of a bar has a specific graphical distinction, where the size of each zone of a bar depends on the number of documents selected by said user into a determined area of the first menu, and where the appearing order of each zones in a bar is the same for all the displayed graphical signatures.

2. Method of displaying graphical signatures according to claim 1, **characterized in that** said inputting of commands of selection (2.3) of a document is performed by graphically highlighting the graphical identifier identifying said selected document.

3. Method of displaying graphical signatures according to any claims 1 or 2, **characterized in that** the appearing order of the zones in the bar forming each graphical signature depends on the numbers of documents selected by the terminal's user in each area, the zones representing the most numerous selected document being at the first place.

4. Method of displaying graphical signatures according to any claims 1 to 3, **characterized in that** it comprises a step of displaying (2.7) a similarity value between the graphical signature of the terminal's user and the graphical signature of the other users.

5. Method of displaying graphical signatures according to any one of the preceding claims, **characterized in that** the identifiers in each areas of the first menu appear with the same graphical distinction as the corresponding zone in the bar.

6. Method of displaying graphical signatures according to any one of the preceding claims, **characterized in that** it comprises a step of inputting of commands for moving the graphic signatures displayed in the second menu.

7. Method of displaying graphical signatures according to any one of the preceding claims, **characterized in that** the displayed bars are formed with tridimensional zones, the depth of each zone depending on the number of documents selected into the corresponding area of the first menu.

8. Method of displaying graphical signatures according to any one of the preceding claims, **characterized in that** the displayed graphical signatures are determined from several pluralities of documents selected by the same user at different times.

9. Electronic device (1) comprising a means of generating of a display signal (3, 10) of a first menu representing a plurality of documents by corresponding graphical identifiers, the first menu being split in a plurality of areas, each document of said plurality being identified by a graphical identifier which is displayed in an area of the first menu which depends on attribute values associated with this document,
and a means of inputting of commands (7, 8) enabling the selection by a user of at least one document, the selected document(s) being reputed to be representative of the user's preference, **characterized in that**
the means of generating of a display signal (3,10) displaying in a second menu of a plurality of graphical signatures each one being associated with an user, where each displayed signature is determined from the selection of documents selected by its associated user, where each graphical signature of a user is formed by a bar of zones, where each zone of a bar has a specific graphical distinction, where the size of each zone of a bar depends on the number of documents selected by said user into a determined area of the first menu, and where the appearing order of each zones in the bars is the same for all the displayed graphical signatures.

## Patentansprüche

1. Verfahren zum Anzeigen graphischen Signaturen, die die Präferenzen einer Mehrzahl von Nutzern repräsentieren, wobei das Verfahren die folgenden Schritte umfasst:
- vorbereitendes Anzeigen (2.1) eines ersten Menüs, das eine Mehrzahl von Dokumenten repräsentiert, durch entsprechende graphische Kennungen auf dem Anzeigebildschirm (2) eines Endgeräts (1), wobei das erste Menü in eine Mehrzahl von Bereichen geteilt wird, wobei jedes Dokument der Mehrzahl durch eine graphische Kennung identifiziert wird, die in einem Bereich des ersten Menüs, der von Attributwerten, die diesem Dokument zugeordnet sind, abhängt, angezeigt wird,
- Eingeben von Befehlen zur Auswahl (2.3) mindestens eines Dokuments auf der Ebene des Endgeräts (1) durch jeden Nutzer der Mehrzahl von Nutzern, wobei das bzw. die ausgewählten Dokumente für die Präferenz des Nutzers repräsentativ gehalten werden,
**dadurch gekennzeichnet, dass** das Verfahren ferner den folgenden Schritt umfasst:
- nachfolgendes Anzeigen (2.6) einer Mehrzahl von graphischen Signaturen, die jeweils einem Nutzer zugeordnet sind, in einem zweiten Menü auf dem Anzeigebildschirm (2), wobei jede angezeigte Signatur aus der Auswahl von Dokumenten bestimmt wird, die durch ihren zugeordneten Nutzer ausgewählt werden, wobei jede graphische Signatur eines Nutzers durch einen Balken von Zonen gebildet wird, wobei jede Zone eines Balkens einen spezifischen graphischen Unterschied aufweist, wobei die Größe jeder Zone eines Balkens von der Anzahl von Dokumenten abhängt, die durch den Nutzer in einem bestimmten Bereich des ersten Menüs ausgewählt werden, und wobei die Reihenfolge des Erscheinens jeder Zone in einem Balken für alle angezeigten graphischen Signaturen dieselbe ist.

2. Verfahren zum Anzeigen graphischer Signaturen nach Anspruch 1, **dadurch gekennzeichnet, dass** das Eingeben von Befehlen zur Auswahl (2.3) eines Dokuments durch graphisches Hervorheben der graphischen Kennung, die das ausgewählte Dokument identifiziert, ausgeführt wird.

3. Verfahren zum Anzeigen graphischer Signaturen nach einem der Ansprüche 1 oder 2, **dadurch gekennzeichnet, dass** die Reihenfolge des Erscheinens der Zonen in dem Balken, die jede graphische Signatur bilden, von den Anzahlen von Dokumenten abhängt, die durch den Nutzer des Endgeräts in jedem Bereich ausgewählt werden, wobei die Zonen, die das am häufigsten ausgewählte Dokument repräsentieren, an erster Stelle stehen.

4. Verfahren zum Anzeigen graphischer Signaturen nach einem der Ansprüche 1 bis 3, **dadurch gekennzeichnet, dass** es einen Schritt des Anzeigens (2.7) eines Ähnlichkeitswerts zwischen der graphischen Signatur des Nutzers des Endgeräts und der graphischen Signatur der anderen Nutzer umfasst.

5. Verfahren zum Anzeigen graphischer Signaturen nach einem der vorhergehenden Ansprüche, **dadurch gekennzeichnet, dass** die Kennungen in jedem Bereich des ersten Menüs mit demselben graphischen Unterschied wie die entsprechende Zone in dem Balken erscheinen.

6. Verfahren zum Anzeigen graphischer Signaturen nach einem der vorhergehenden Ansprüche, **dadurch gekennzeichnet, dass** es einen Schritt zum Eingeben von Befehlen zum Verschieben der in dem zweiten Menü angezeigten graphischen Signaturen umfasst.

7. Verfahren zum Anzeigen graphischer Signaturen nach einem der vorhergehenden Ansprüche, **dadurch gekennzeichnet, dass** die angezeigten Balken mit dreidimensionalen Zonen gebildet werden, wobei die Tiefe jeder Zone von der Anzahl der Dokumente abhängt, die in dem entsprechenden Bereich des ersten Menüs ausgewählt werden.

8. Verfahren zum Anzeigen graphischer Signaturen nach einem der vorhergehenden Ansprüche, **dadurch gekennzeichnet, dass** die angezeigten graphischen Signaturen aus mehreren Mehrzahlen von Dokumenten, die durch denselben Nutzer zu unterschiedlichen Zeiten ausgewählt werden, bestimmt werden.

9. Elektronische Vorrichtung (1), die ein Mittel zum Erzeugen eines Anzeigesignals (3, 10) eines ersten Menüs, das eine Mehrzahl von Dokumenten durch entsprechende graphische Kennungen repräsentiert, umfasst, wobei das erste Menü in eine Mehrzahl von Bereichen geteilt ist, wobei jedes Dokument der Mehrzahl durch eine graphische Kennung identifiziert ist, die in einem Bereich des ersten Menüs, der von Attributwerten, die diesem Dokument zugeordnet sind, abhängt, angezeigt wird, und ein Mittel zum Eingeben von Befehlen (7, 8), die die Auswahl mindestens eines Dokuments durch einen Nutzer ermöglichen, wobei das bzw. die ausgewählten Dokumente für die Präferenz des Nutzers repräsentativ gehalten werden, **dadurch gekennzeichnet, dass**
das Mittel zum Erzeugen eines Anzeigesignals (3, 10) in einem zweiten Menü eine Mehrzahl von graphischen Signaturen, die jeweils einem Nutzer zugeordnet sind, anzeigt, wobei jede angezeigte Signatur aus der Auswahl von durch ihren zugeordneten Nutzer ausgewählten Dokumenten bestimmt ist, wobei jede graphische Signatur eines Nutzers durch einen Balken von Zonen gebildet ist, wobei jede Zone eines Balkens einen spezifischen graphischen Unterschied aufweist, wobei die Größe jeder Zone eines Balkens von der Anzahl von Dokumenten abhängt, die durch den Nutzer in einem bestimmten Bereich des ersten Menüs ausgewählt sind, und wobei die Reihenfolge des Erscheinens jeder Zone in den Balken für alle angezeigten graphischen Signaturen dieselbe ist.

## Revendications

1. Méthode d'affichage d'une signature graphique représentative des préférences d'une pluralité d'utilisateurs, comprenant les étapes suivantes :
- sur l'écran d'affichage (2) d'un terminal (1), l'affichage préliminaire (2.1) d'un premier menu représentant une pluralité de documents à l'aide d'identifiants graphiques correspondants, le premier menu étant divisé en une pluralité de zones, chaque document de ladite pluralité étant identifié par un identifiant graphique affiché dans une zone du premier menu dépendant des valeurs d'attribut associées à ce document,
- par chaque utilisateur de ladite pluralité d'utilisateurs, la saisie de commandes de sélection (2.3) d'au moins un document au niveau du terminal (1), les ou les documents sélectionnés étant réputés pour être représentatifs de la préférence de l'utilisateur,
**caractérisée en ce que** la méthode comprend l'étape suivante :
- sur l'écran d'affichage (2), l'affichage subséquent (2.6) dans un second menu d'une pluralité de signatures graphiques, chacune d'elles étant associé à un utilisateur, où chaque signature affichée est déterminée à partir de la sélection de documents sélectionnés par son utilisateur associé, où chaque signature graphique d'un utilisateur se compose d'une barre de zones, où chaque zone d'une barre dispose d'une distinction graphique spécifique, où la taille de chaque zone d'une barre dépend du nombre de documents sélectionnés par ledit utilisateur dans une zone déterminée du premier menu, et où l'ordre d'apparition de chaque zone d'une barre est identique pour toutes les signatures graphiques affichées.

2. Méthode d'affichage des signatures graphiques selon la revendication 1, **caractérisée en ce que** ladite saisie des commandes de sélection (2.3) d'un document s'effectue par la sélection graphique de l'identifiant graphique identifiant ledit document sélectionné.

3. Méthode d'affichage des signatures graphiques selon la revendication 1 ou 2, **caractérisée en ce que** l'ordre d'apparition des zones dans la barre formant chaque signature graphique dépend du nombre de documents sélectionné par l'utilisateur du terminal dans chaque zone, les zones représentant le document le plus sélectionné s'affichant en première place.

4. Méthode d'affichage des signatures graphiques selon l'une des revendications 1 à 3, **caractérisée en ce qu'**elle comprend une étape d'affichage (2.7) d'une valeur de similarité entre la signature graphique de l'utilisateur du terminal et la signature graphique des autres utilisateurs.

5. Méthode d'affichage des signatures graphiques selon l'une des revendications précédentes, **caractérisée en ce que** les identifiants de chaque zone du premier menu s'affichent avec la même distinction graphique que la zone correspondante dans la barre.

6. Méthode d'affichage des signatures graphiques selon l'une des revendications précédentes, **caractérisée en ce qu'**elle comprend une étape de saisie de commandes pour déplacer les signatures graphiques affichées dans le second menu.

7. Méthode d'affichage des signatures graphiques conformément à l'une des revendications précédentes, **caractérisée en ce que** les barres affichées sont formées de zones tridimensionnelles, la profondeur de chaque zone dépendant du nombre de documents sélectionnés dans la zone correspondante du premier menu.

8. Méthode d'affichage des signatures graphiques selon l'une des revendications précédentes, **caractérisée en ce que** les signatures graphiques affichées sont déterminées à partir de plusieurs pluralités de documents sélectionnés par le même utilisateur à différents moments.

9. Dispositif électronique (1) comprenant un moyen pour générer un signal d'affichage (3, 10) d'un premier menu représentant une pluralité de documents à l'aide d'identifiants graphiques correspondants, le premier menu étant divisé en une pluralité de zones, chaque document de ladite pluralité étant identifié par un identifiant graphique affiché dans la zone du premier menu dépendant des valeurs d'attribut associées à ce document,
et un moyen pour un utilisateur de saisir des commandes (7,8) afin de sélectionner au moins un document, le ou les documents sélectionnés étant réputés pour être représentatifs de la préférence de l'utilisateur, **caractérisé en ce que** le moyen de génération du signal d'affichage (3, 10) s'affichant dans un second menu d'une pluralité de signatures graphiques, chacune d'elles étant associé à un utilisateur, où chaque signature affichée est déterminée à partir de la sélection de documents sélectionnés par son utilisateur associé, où chaque signature graphique d'un utilisateur se compose d'une barre de zones, où chaque zone d'une barre dispose d'une distinction graphique spécifique, où la taille de chaque zone d'une barre dépend du nombre de documents sélectionnés par ledit utilisateur dans une zone déterminée du premier menu, et où l'ordre d'apparition de chaque zone d'une barre est identique pour toutes les signatures graphiques affichées.
